(19) Europäisches Patentamt
European Patent Office
Office européen des brevets

(11) EP 4 524 625 A1

(12) **EUROPEAN PATENT APPLICATION**

(43) Date of publication:
**19.03.2025 Bulletin 2025/12**

(21) Application number: **23197095.5**

(22) Date of filing: **13.09.2023**

(51) International Patent Classification (IPC):
**G02B 6/02** *(2006.01)* **G02B 6/032** *(2006.01)*

(52) Cooperative Patent Classification (CPC):
**G02B 6/02314; C03B 37/0253; G02B 6/02328; G02B 6/02342; G02B 6/02366;** C03B 2201/02; C03B 2201/30; C03B 2201/82; C03B 2201/86; C03B 2203/14; C03B 2203/16; C03B 2203/42

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **ASML Netherlands B.V.**
  **5500 AH Veldhoven (NL)**

• **Max-Planck-Gesellschaft zur Förderung der Wissenschaften e.V.**
  **80539 München (DE)**

(72) Inventors:
• **UEBEL, Patrick, Sebastian**
  **5500 AH Veldhoven (NL)**
• **FROSZ, Michael, Henoch**
  **5500 AH Veldhoven (NL)**

(74) Representative: **ASML Netherlands B.V.**
  **Corporate Intellectual Property**
  **P.O. Box 324**
  **5500 AH Veldhoven (NL)**

(54) **METHOD OF DETERMINING A DIMENSIONAL PARAMETER OF A MICROSTRUCTURED OPTICAL FIBER**

(57) A method of determining a dimensional parameter of a microstructured optical fiber (MOF), the method comprising: directing radiation towards the MOF; obtaining one or more signals associated with interference of the radiation between structural elements of the MOF; determining a distance between the structural elements based on the one or more signals associated with interference of the radiation between structural elements of the MOF; and determining the dimensional parameter based on the determined distance. A method for obtaining a MOF is also described.

Fig. 15

**Description**

FIELD

The present invention relates to determining a dimensional parameter of a microstructured optical fiber (MOF), for example a core diameter. In particular, the present invention relates to determining the dimensional parameter based on one or more signals associated with interference of radiation between structural elements of a MOF (e.g. Fabry-Pérot interference).

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In the field of lithography, many measurement systems may be used, both within a lithographic apparatus and external to a lithographic apparatus. Generally, such a measurement system may use a radiation source to irradiate a target with radiation, and a detection system operable to measure at least one property of a portion of the incident radiation that scatters from the target. An example of a measurement system that is external to a lithographic apparatus is an inspection apparatus or a metrology apparatus, which may be used to determine properties of a pattern previously projected onto a substrate by the lithographic apparatus. Such an external inspection apparatus may, for example, comprise a scatterometer. Examples of measurement systems that may be provided within a lithographic apparatus include: a topography measurement system (also known as a level sensor); a position measurement system (for example an interferometric device) for determining position of a reticle or wafer stage; and an alignment sensor for determining a position of an alignment mark. These measurement devices may use electromagnetic radiation to perform the measurement.

Different types of radiation may be used to interrogate different types of properties of a pattern. Some measurement systems may employ a broadband radiation source. Such a broadband radiation source may be a supercontinuum source and may comprise an optical fiber, for example a microstructured optical fiber (MOF), having a non-linear medium through which a pulsed pump radiation beam is propagated to broaden a spectrum of the radiation.

In some examples, the performance of the broadband radiation source may be very sensitive to the dimensions of the optical fiber. It is therefore important to be able to measure the dimensions of the fiber reliably and with a high degree of precision. Currently, it is common to measure these critical dimensions using a microscope (e.g. an optical microscope, or a scanning electron microscope). This can either be performed during a manufacturing process of an optical fiber (which may be referred to as a drawing process), by sampling a fiber piece taken out of the manufacturing (drawing) process, or after the manufacturing (drawing) process has been completed for a given fiber, by analyzing the ends of the manufactured fiber.

SUMMARY

The present disclosure provides a method of determining one or more dimensions (or "dimensional parameters") of a microstructured optical fiber (MOF) by obtaining one or more signals associated with interference of radiation between structural elements of the MOF. The methods described herein may advantageously be applicable during the fiber manufacturing (drawing) process (i.e. "in-line"), meaning that, in some examples, real-time information regarding the critical dimensions of the fiber can be obtained during manufacturing.

A MOF may comprise a photonic crystal fiber (PCF), and/or a hollow core photonic crystal fiber (HCPCF). A MOF may comprise a core region (e.g. a hollow core) and a plurality of anti-resonant elements (AREs) surrounding the core region. The AREs may be referred to as "capillaries" in some examples. Each of the AREs may be defined by a wall having a wall thickness.

Existing techniques for determining the dimensional parameters of a MOF often require interrupting, and/or concluding, the MOF manufacturing process before the relevant measurement(s) can be performed. For example, a MOF manufacturing process may comprise feeding a preform (e.g. a glass preform) into a furnace to heat the preform, and drawing the heated preform into a fiber by pulling at one or both ends of the heated preform.

For example, during the drawing process, a fiber piece may be sampled (i.e. removed from the drawing process) and analysed under a microscope (e.g. an optical microscope or a scanning electron microscope). If the fiber piece exhibits one or more dimensional parameters that is/are outside of a particular tolerance range, the parameters of the drawing process may be adjusted. This process may be completed until all of the dimensional parameters are within their respective tolerance ranges. This approach may suffer from several disadvantages. For example, the fiber preform may be continually fed into the furnace before and during sampling and characterization, resulting in wasted material and reduced throughput. In addition, no direct information about a subsequently formed fiber is obtained (the dimensional parameters are only inferred based on the sample).

In another example, once a fiber of a desired length has been drawn, the fiber may be cut at one or both ends and the dimensional parameters at the end(s) may be characterized using a microscope (e.g. an optical microscope or a scanning electron microscope). However, this technique provides no information on the dimensional parameters along the length of the fiber.

While X-ray tomography has been used to provide non-invasive measurement of a fiber structure along a length of the fiber, this technique is very slow, for example it can take several hours to measure a short (~ cm) length of fiber.

A dimensional parameter may include a diameter of a core region, a diameter of one or more of the AREs, a wall thickness of one or more of the AREs, and/or a distance between AREs.

It has been proposed (for example in M. H. Frosz et al., Opt. Express 27 (21) p. 30842-30851 (2019), the contents of which are hereby incorporated by reference) to use whispering gallery mode (WGM) spectroscopy to measure the diameter of AREs (capillaries) "in-line" (i.e. during the fiber manufacturing process). In WGM spectroscopy, the fiber is illuminated from the side with broadband light, thereby exciting light travelling around the capillaries. The light couples out from the fiber, and by collecting and analysing the spectrum of the light exiting the fiber at an angle equal to an angular separation of the capillaries, the optical path length that the light has travelled around a capillary can be determined. The physical path length can be calculated from the optical path length by *a priori* calculating the effective index of the WGM mode by making an assumption of the capillary wall thickness. From this one can then infer the diameter of the capillary.

However, one drawback of the WGM spectroscopy technique is that a direct measurement of one of the most critical dimensional parameters, the core diameter, is not viable (since the technique relies on light interaction only with the capillaries). In addition, the WGM spectroscopy technique requires determination of the group index of the light in the capillary (ARE) walls, which requires knowledge of the expected capillary (ARE) wall thickness.

There is therefore a need for an improved method to determine a dimensional parameter of a fiber (e.g. a MOF).

Described herein is a method of determining a dimensional parameter of a MOF.

The method may comprise directing radiation towards the MOF.

The method may comprise obtaining one or more signals associated with interference of the radiation between structural elements of the MOF.

The method may comprise determining a distance between the structural elements based on the one or more signals associated with interference of the radiation between structural elements of the MOF.

The method may comprise determining the dimensional parameter based on the determined distance.

Alternatively, or in addition, the method may comprise obtaining one or more signals associated with interference of the radiation within structural elements of the MOF, and the method may comprise determining a diameter of the structural elements based on the one or more signals associated with interference of the radiation within structural elements of the MOF.

In an example, a method may comprise detecting signals associated with Fabry-Pérot interference of the radiation within an optical cavity formed by one or more structural elements of the MOF. The method may comprise determining a width of the optical cavity based on the detected signals. The method may comprise determining the dimensional parameter based on the determined width of the optical cavity.

Advantageously, the methods described herein may enable in-line determination of the dimensional parameter of the fiber. In other words, the methods can be carried out during the manufacturing (drawing) process, without requiring interruption of the process. Accordingly, real-time adjustments can therefore be made to process parameters of the manufacturing process (such as to a pressure in the capillaries, which governs the ARE diameter), if a determined structural parameter is outside of a specification for the fiber (e.g. outside of a tolerance range). However, it will be appreciated that the methods described herein can alternatively, or in addition, be used to determine dimensional parameters of a fiber after the drawing process.

Further advantageously, the methods described herein may enable determination of one or more dimensional parameters along a whole length of a manufactured fiber, rather than merely at the fiber end(s). The methods described herein may also enable non-invasive investigation of the entire length of a fiber much more quickly than other techniques, such as X-ray tomography.

While it has been demonstrated, for example in X. Xu et al., Opt. Lett. 43 (13) p. 3045-3048 (2018) (the contents of which are hereby incorporated by reference), that a core diameter of a "photonic bandgap" type fiber (i.e. without AREs) can be directly determined using Fabry-Pérot interference, the authors of that study filled the entire structure with an index-matching liquid in order to achieve this result. Such an approach is clearly not suitable for in-line measurements of a MOF, which are enabled by the methods described herein. In addition, without wishing to be bound by theory, the unstable resonator of the core geometry formed by the negative curvature of the AREs in a MOF, mean that direct measurement of the core diameter using Fabry-Pétot interference is very difficult, or likely impossible.

In addition, the methods described herein do not require any prior knowledge of the ARE wall thickness, other than that the ARE wall thickness is much smaller than the ARE diameter, which is true for practically relevant cases. However, in some examples, the dimensional parameter(s) can be determined to an even greater accuracy by determining t by employing sufficiently broadband radiation, and/or by determining t by some other method in combination with the methods described herein.

Determination of dimensional parameters according to the methods described herein is also advantageously not affected by the polarisation of the radiation used, unlike in the case of WGM spectroscopy techniques.

Furthermore, in the case of WGM spectroscopy techniques, the ARE diameter measurement error is affected by relative rotation between the fiber and the measurement setup; the measurement error increases the more the measurement angle deviates from the optimum. In contrast, determination of dimensional parameters according to the methods described herein is advantageously not affected by rotation of the fiber, which may occur during manufacturing, for example.

The methods described herein may also be advantageously suitable for use in fibers having non-circular (e.g. polygonal, such as hexagonal) cross sections, in contrast to WGM spectroscopy techniques in which coupling of the light to the capillaries (AREs) may be less efficient than in the case of a round cross section. The fiber cross section may be defined by a jacket (e.g. an inner jacket) of the fiber.

In some examples, the determined dimensional parameter may correspond substantially directly to the determined distance between the structural elements, the determined diameter of the structural elements, and/or the determined width of the optical cavity.

For example, the structural elements of the MOF may comprise anti-resonant elements (AREs), or capillaries. The determined dimensional parameter may comprise a distance, or separation, between the AREs (i.e. between adjacent AREs), and/or a diameter of the AREs. It will be understood that the distance between AREs is a smallest separation between adjacent AREs.

In some examples, determining the dimensional parameter based on the determined distance may comprise performing additional calculations or computations based on one or more determined distances, diameters, and/or optical cavity widths determined by the methods described herein.

In some examples, the method may comprise determining the dimensional parameter based on the determined distance, and a geometrical layout of the MOF. For example, the geometrical layout of the MOF may comprise an arrangement of structural elements, for example a distribution of AREs around a core region.

The MOF may comprise a core region, and the structural elements may be AREs surrounding the core region. The dimensional parameter may comprise a core diameter, the core diameter being a diameter of the core region.

In some examples, the method comprises: obtaining one or more signals associated with interference of the radiation within one or more of the anti-resonant elements; determining an anti-resonant element diameter of the one or more of the anti-resonant elements based on the one or more signals associated with interference of the radiation within one or more of the anti-resonant elements; and determining the dimensional parameter based additionally on the anti-resonant element diameter. For example, the core diameter may be determined based on a mathematical relationship between the distance between structural elements (e.g. AREs) and the diameter of the structural elements, where the distance between the structural elements and the diameters of the structural elements may be determined experimentally based on the signals associated with interference of the radiation.

In some examples, the dimensional parameter (e.g. the core diameter), $D$, may be determined according to:

$$D = \left[ \frac{1 + \dfrac{\delta}{d_{out}}}{\sin\left(\dfrac{\pi}{N}\right)} - 1 \right] \cdot d_{out}$$

wherein $\delta$ is a distance between the AREs, wherein A is a total number of AREs, and wherein $d_{out} = d + 2t$, wherein $d$ is an ARE diameter and wherein $t$ is a wall thickness of the AREs. In some examples, $d_{out} = d + 2t \approx d$. As described herein, the presently described methods advantageously do not necessarily require any prior knowledge of $t$ (e.g. where $d_{out} = d + 2t \approx d$). Preferably, $D > d \gg t$. It will be understood that $d_{out}$ is an outer diameter of the AREs, while $d$ is an inner diameter of the AREs.

In some examples, the dimensional parameter comprises a wall thickness of the AREs. It will be appreciated that the wall thickness of the AREs (e.g. $t$) can be determined based on measurements of the distance between the AREs and the ARE diameter, and/or the wall thickness of the AREs can be determined directly from the interference signals. In some examples, $d_{out}$ can be more accurately determined by determination of $t$, either from the interference signals or by some other technique, such as described in Y. Xiong et al., Opt. Express 30 (26) p. 48061-48074 (2022), the contents of which are hereby incorporated by reference.

In some examples, the dimensional parameter comprises a distance between the AREs (e.g. $\delta$).

In some examples, the dimensional parameter comprises an ARE diameter (e.g. $d$).

In some examples, the method comprises using a first radiation source and a second radiation source to direct the radiation radially towards a longitudinal axis of the MOF, the first radiation source and the second radiation source being angularly separated about the longitudinal axis by an angle $\Phi$, wherein $\phi = n\beta \cdot \theta$, wherein $\theta$ is an angular separation between the anti-resonant elements, wherein $0.25 \leq \beta \leq 0.75$, and wherein $n$ is a positive integer. For example, the first radiation source and the second radiation source may be angularly separated about the longitudinal axis by an odd integer multiple of substantially half of an angular separation between the anti-resonant elements.

Advantageously, performing two measurements simultaneously using first and second radiation sources angularly separated by $\Phi$ may prevent the loss of measurement signal if the fiber rotates during the measurement. The loss of measurement signal may be due to a "dead zone" formed when the radiation incident on the fiber passes between AREs.

In contrast, in some examples, a single radiation source may be used to direct the radiation towards the MOF. Advantageously, use of a single radiation source may provide a simple setup to determine dimensional parameters.

In some examples, the MOF comprises a polygonal inner cross section. For example, a hexagonal or octagonal inner cross section. The inner cross section may be defined by a jacket, described herein.

In some examples, the AREs may be evenly distributed around the core region. For example, in the case of polygonal inner cross section, the AREs may be situated at vertices of the inner cross section.

The interference described herein may comprise Fabry-Pérot interference.

The radiation described herein, which may originate from one or more radiation sources as described herein, is preferably broadband radiation. For example, the broadband radiation may comprise radiation wavelengths ranging from ultraviolet (UV) to infrared (IR) or near infrared (NIR) radiation, e.g. 200-1200 nm.

One or more of the methods described herein may be implemented using a computer.

Also described herein is a method for obtaining a MOF, comprising: monitoring a dimensional parameter during a MOF manufacturing process by determining a dimensional parameter of a MOF being manufactured by the MOF manufacturing process; and if the determined dimensional parameter is outside of a tolerance range, adjusting a parameter of the MOF manufacturing process. The dimensional parameter may be determined by any of the methods for determining a dimensional parameter described herein.

An example of a parameter of the MOF manufacturing process may include a pressure in the capillaries, or AREs, of the fiber during the drawing process. For example, increasing the pressure in the AREs increases the ARE diameter, $d$, and therefore decreases the core diameter, $D$.

Advantageously, by monitoring the dimensional parameter using the dimensional parameter determining method described herein, the manufacturing process parameter(s) for the MOF can be adjusted in real time, reducing the amount of wasted material and increasing manufacturing throughput.

Additionally described herein is a non-transitory computer readable medium comprising instructions which, when executed by a processor of a computing device, cause the computing device to carry out any of the methods described herein.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing; Figure 4 depicts a schematic overview of a scatterometer metrology tool;
- Figure 5 depicts a schematic overview of a level sensor metrology tool;
- Figure 6 depicts a schematic overview of an alignment sensor metrology tool;
- Figure 7 is a schematic cross sectional view of a microstructured optical fiber (MOF) in a transverse plane (i.e. perpendicular to an axis of the MOF);

- Figure 8 is a schematic cross sectional view of the MOF shown in Figure 7 in a plane containing the axis of the MOF;
- Figure 9 shows simulated results of a reflection spectrum obtained for a simulated MOF, where a Fourier transform has been applied to the data so that various structural parameters can be resolved;
- Figure 10 schematically illustrates an example of a hexagonal MOF comprising six anti-resonant elements (AREs);
- Figure 11 shows simulated results for a further MOF;
- Figure 12 shows measurements on a MOF performed using radiation having different polarisations;
- Figure 13 shows measurements of a reflection spectrum resolved by rotation angle of a MOF;
- Figure 14 schematically illustrates an example of a measurement setup including first and second radiation sources;
- Figure 15 schematically illustrates an example of a method for determining a dimensional parameter of a MOF according to the present disclosure;
- Figure 16 schematically illustrates an example of a method for obtaining a MOF according to the present disclosure; and
- Figure 17 schematically depicts an example computer system in which embodiments of the present disclosure can be implemented.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

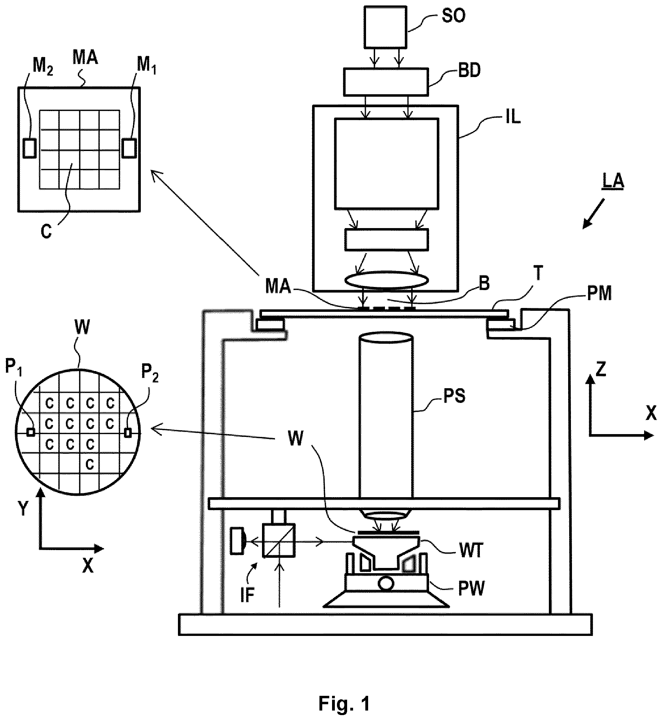

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid.

The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

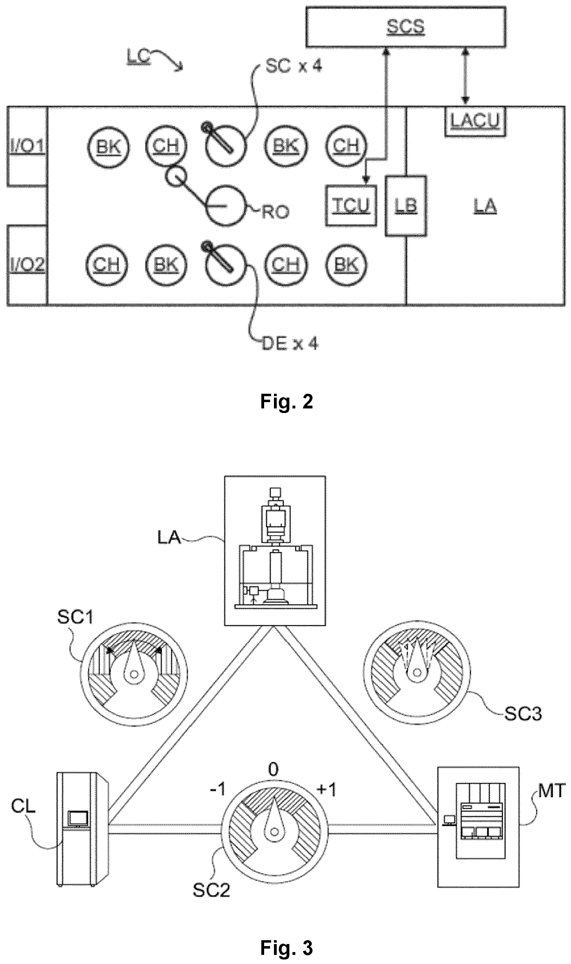

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization state. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

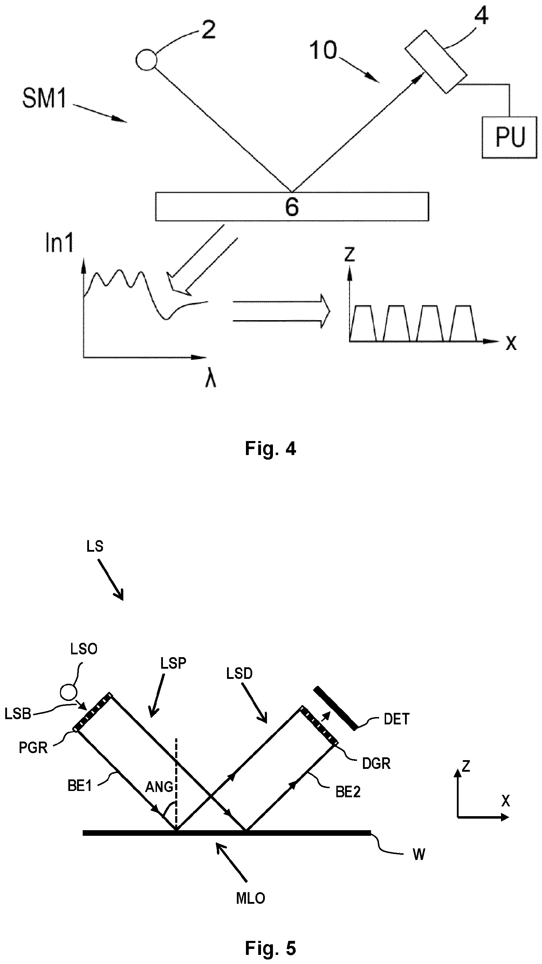

A metrology apparatus, such as a scatterometer SM1, is depicted in figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity In1 as a function of wavelength $\lambda$) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

In lithographic processes, it is desirable to make frequently measurements of the structures created, e.g., for process control and verification. Various tools for making such measurements are known, including scanning electron microscopes or various forms of metrology apparatuses, such as scatterometers. Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometer illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers can measure in one image multiple targets from from multiple gratings using light from soft x-ray and visible to near-IR wave range.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD.

The projection unit LSP comprises a radiation source LSO providing a beam of radiation LSB which is imparted by a projection grating PGR of the projection unit LSP. The radiation source LSO may be, for example, a narrowband or broadband radiation source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

The position measurement system PMS may comprise any type of sensor that is suitable to determine a position of the substrate support WT. The position measurement system PMS may comprise any type of sensor that is suitable to determine a position of the mask support MT. The sensor may be an optical sensor such as an interferometer or an encoder. The position measurement system PMS may comprise a combined system of an interferometer and an encoder. The sensor may be another type of sensor, such as a magnetic sensor. a capacitive sensor or an inductive sensor. The position measurement system PMS may determine the position relative to a reference, for example the metrology frame MF or the projection system PS. The position measurement system PMS may determine the position of the substrate table WT and/or the mask support MT by measuring the position or by measuring a time derivative of the position, such as velocity or acceleration.

The position measurement system PMS may comprise an encoder system. An encoder system is known from for example, United States patent application US2007/0058173A1, filed on September 7, 2006, hereby incorporated by reference. The encoder system comprises an encoder head, a grating and a sensor. The encoder system may receive a primary radiation beam and a secondary radiation beam. Both the primary radiation beam as well as the secondary radiation beam originate from the same radiation beam, i.e., the original radiation beam. At least one of the primary radiation beam and the secondary radiation beam is created by diffracting the original radiation beam with the grating. If both the primary radiation beam and the secondary radiation beam are created by diffracting the original radiation beam with the grating, the primary radiation beam needs to have a different diffraction order than the secondary radiation beam. Different diffraction orders are, for example,+1st order, -1st order, +2nd order and -2nd order. The encoder system optically combines the primary radiation beam and the secondary radiation beam into a combined radiation beam. A sensor in the encoder head determines a phase or phase difference of the combined radiation beam. The sensor generates a signal based on the phase or phase difference. The signal is representative of a position of the encoder head relative to the grating. One of the encoder head and the grating may be arranged on the substrate structure WT. The other of the encoder head and the grating may be arranged on the metrology frame MF or the base frame BF. For example, a plurality of encoder heads are arranged on the metrology frame MF, whereas a grating is arranged on a top surface of the substrate support WT. In another example, a grating is arranged on a bottom surface of the substrate support WT, and an encoder head is arranged below the substrate support WT.

The position measurement system PMS may comprise an interferometer system. An interferometer system is known from, for example, United States patent US6,020,964, filed on July 13, 1998, hereby incorporated by reference. The interferometer system may comprise a beam splitter, a mirror, a reference mirror and a sensor. A beam of radiation is split by the beam splitter into a reference beam and a measurement beam. The measurement beam propagates to the mirror and is reflected by the mirror back to the beam splitter. The reference beam propagates to the reference mirror and is reflected by the reference mirror back to the beam splitter. At the beam splitter, the measurement beam and the reference beam are combined into a combined radiation beam. The combined radiation beam is incident on the sensor. The sensor determines a phase or a frequency of the combined radiation beam. The sensor generates a signal based on the phase or the frequency. The signal is representative of a displacement of the mirror. In an embodiment, the mirror is connected to the substrate support WT. The reference mirror may be connected to the metrology frame MF. In an embodiment, the measurement beam and the reference beam are combined into a combined radiation beam by an additional optical component instead of the beam splitter.

In the manufacture of complex devices, typically many lithographic patterning steps are performed, thereby forming functional features in successive layers on the substrate. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks. Each mark is a structure whose position can be measured at a later time using a position sensor, typically an optical position sensor. The position sensor may be referred to as "alignment sensor" and marks may be referred to as "alignment marks". A mark may also be referred to as a metrology target.

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

A mark, or alignment mark, may comprise a series of bars formed on or in a layer provided on the substrate or formed (directly) in the substrate. The bars may be regularly spaced and act as grating lines so that the mark can be regarded as a diffraction grating with a well-known spatial period (pitch). Depending on the orientation of these grating lines, a mark may be designed to allow measurement of a position along the X axis, or along the Y axis (which is oriented substantially perpendicular to the X axis). A mark comprising bars that are arranged at +45 degrees and/or -45 degrees with respect to both the X- and Y-axes allows for a combined X- and Y-measurement using techniques as described in US2009/195768A, which is incorporated by reference.

The alignment sensor scans each mark optically with a spot of radiation to obtain a periodically varying signal, such as a sine wave. The phase of this signal is analyzed, to determine the position of the mark and, hence, of the substrate relative to the alignment sensor, which, in turn, is fixated relative to a reference frame of a lithographic apparatus. So-called coarse and fine marks may be provided, related to different (coarse and fine) mark dimensions, so that the alignment sensor can distinguish between different cycles of the periodic signal, as well as the exact position (phase) within a cycle. Marks of different pitches may also be used for this purpose.

Measuring the position of the marks may also provide information on a deformation of the substrate on which the marks are provided, for example in the form of a wafer grid. Deformation of the substrate may occur by, for example, electrostatic clamping of the substrate to the substrate table and/or heating of the substrate when the substrate is exposed to radiation.

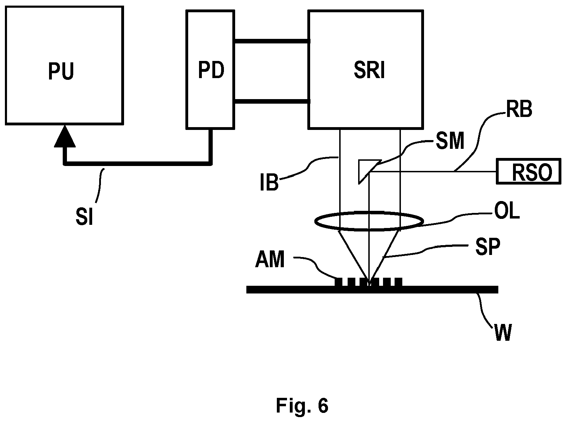

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and demultiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation, for example making use of non-linear, higher order effects. The input radiation (which may be produced using a laser) may be referred to as pump radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some applications, methods and apparatuses for broadening input radiation may employ an optical fiber for confining input radiation. The optical fiber may be a microstructured optical fiber (MOF), which may comprise internal structures to achieve effective guiding and confinement of radiation in the fiber. A MOF may be a photonic crystal fiber (PCF), e.g. a hollow core photonic crystal fiber (HCPCF). A hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

The internal structures of the MOF may be referred to as structural elements, and may particularly comprise anti-resonant elements (AREs). Such fibers comprising AREs are known in the art as anti-resonant fibers, tubular fibers, single-ring fibers, negative curvature fibers or inhibited coupling fibers. Various different designs of such fibers are known in the art.

It will be appreciated that an ARE is intended to mean an element which is arranged to confine radiation within the hollow core predominantly by anti-resonance. In particular, the term anti-resonance element is not intended to encompass elements that are arranged to confine radiation within the hollow core by predominantly creating a photonic bandgap in the cladding portion (such as, for example, hollow-core photonic bandgap fibers). Pure photonic bandgap fibers offer very low loss over a very limited bandwidth. Optical fibers which guide radiation using anti-resonance elements can have a broader transmission window (i.e. having a larger transmission bandwidth) than photonic bandgap fibers. Advantageously, such fibers may therefore be better suited for use in an apparatus for receiving input radiation and broadening a frequency range of the input radiation so as to provide output radiation (for example a supercontinuum source).

As described herein, a MOF may form part of a radiation source SO, LSO, RSO, e.g. as part of metrology arrangement for determining a parameter of interest of a structure on a substrate as described herein. The metrology arrangement described above may form part of a metrology apparatus MT. The metrology arrangement described above may form part of an inspection apparatus. The metrology arrangement described above may be included inside a lithographic apparatus LA.

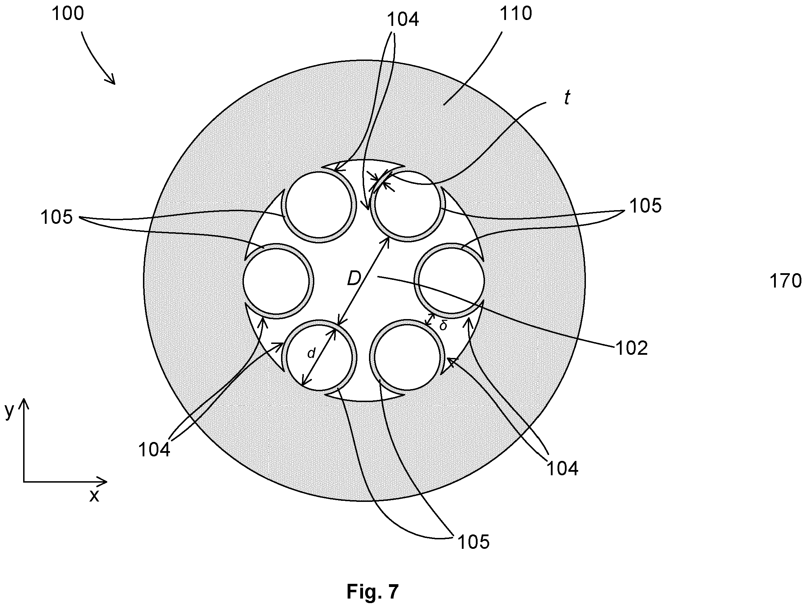

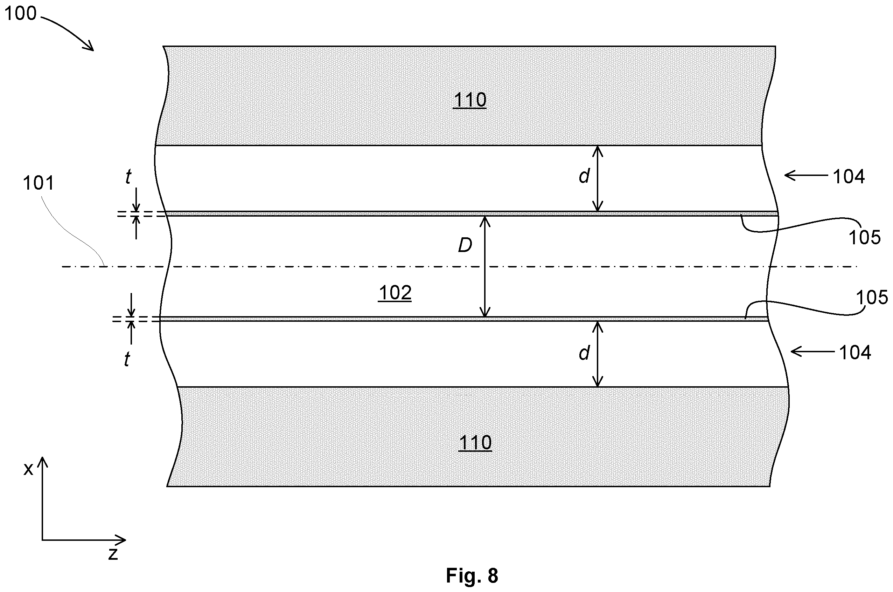

Figures 7 and 8 illustrate an example of a MOF, also referred to herein as an optical fiber, 100 according to the present disclosure. Figures 7 and 8 are schematic cross sectional views of the MOF 100 in two mutually perpendicular planes.

The MOF 100 comprises an elongate body, which is longer in one dimension compared to the other two dimensions of the MOF 100. This longer dimension may be referred to as an axial direction and may define an axis 101 of the MOF 100. The two other dimensions define a plane which may be referred to as a transverse plane. Figure 7 shows a cross-section of the MOF 100 in the transverse plane (i.e. perpendicular to the axis 101), which is labelled as the x-y plane. Figure 8 shows a cross-section of the MOF 100 in a plane containing the axis 101, in particular the x-z plane. The transverse cross-section of the MOF 100 may be substantially constant along the fiber axis 101.

It will be appreciated that the MOF 100 has some degree of flexibility and therefore the direction of the axis 101 will not, in general, be uniform along the length of the MOF 100. The terms such as the optical axis 101, the transverse cross-section and the like will be understood to mean the local optical axis 101, the local transverse cross-section and so on. Furthermore, where components are described as being cylindrical or tubular these terms will be understood to encompass such shapes that may have been distorted as the MOF 100 is flexed.

The MOF 100 may have any length and it will be appreciated that the length of the MOF 100 may be dependent on the application (for example the amount of spectral broadening that is desired in applications within a supercontinuum radiation source). The MOF 100 may have a length between 1 cm and 10 m, for example, the MOF 100 may have a length between 10 cm and 100 cm.

The MOF 100 comprises: a hollow core 102; a plurality of AREs 104, also referred to as capillaries, surrounding the core region 102 for guiding radiation through the core region 102; and a jacket region 110 surrounding and supporting the AREs 104. In particular, the plurality of AREs 104 are arranged to confine radiation that propagates through the optical fiber 100 predominantly inside the core region 102 and to guide the radiation along the optical fiber 100. The core region 102 of the optical fiber 100 may be disposed substantially in a central region of the optical fiber 100, so that the axis 101 of the optical fiber 100 may also define an axis of the core region 102 of the optical fiber 100.

The jacket region 110 may be formed from a material that comprises glass. That is, the material comprises an amorphous (i.e. non-crystalline) material that exhibits a glass transition when heated to a transition temperature. For example, the material may comprise a silica glass. For example, parts of the MOF 100 (for example the AREs 104 and the jacket region 110) may comprise any of the following: high purity silica ($SiO_2$) (for example the F300 material as marketed by Heraeus Holding GmbH of Germany); soft glasses such as for example lead-silicate glass (for example the SF6 glass marketed by Schott AG of Germany); or other specialty glasses such as for example chalcogenide glass or heavy metal fluoride glasses (also referred to as ZBLAN glasses). Advantageously, glass materials do not outgas.

The AREs 104 may comprise tubular capillaries. The AREs 104 are each defined by a generally cylindrical wall 105 that at least partially defines the core region 102 of the MOF 100 and separates the core region 102 from a cavity defined by the ARE wall 105. Each portion of the ARE walls 105 facing the core region 102 acts to guide the radiation propagating through the MOF 100.

In the example illustrated in Figures 7 and 8, the MOF 100 comprises a single ring of six AREs 104, and the MOF 100 comprises a substantially circular inner cross section defined by the jacket region 110. However, it will be appreciated that a MOF 100 may comprise any other suitable number of AREs 104, for example five, seven, eight, nine, ten, eleven, twelve, or more AREs 104. Furthermore, as described herein, some examples of MOFs 100 may not have a circular inner cross section. For example, the inner cross section may be polygonal, e.g. hexagonal, or octagonal.

Several dimensional parameters of the MOF 100 are critical to its performance for broadband radiation generation. These dimensional parameters include: an ARE 104 (inner) diameter, $d$, a thickness, $t$, of the ARE walls 105, a separation, $\delta$, between the AREs 104, and a core diameter, $D$, the core diameter being a diameter of the core region 102.

As described herein, it is desirable to be able to determine the dimensional parameters along the entire length of a MOF 100, and/or during manufacturing of the MOF 100, in order to determine whether the MOF 100 is within specification. As described herein, existing methods for determining the dimensional parameters, such as whispering gallery mode (WGM) spectroscopy, require knowledge of the ARE wall thickness, t.

According to the present disclosure, one or more dimensional parameters of a MOF 100 may be determined by detecting signals associated with interference (e.g. Fabry-Pérot interference) of radiation between, and/or within, structural elements of the MOF 100. For example, broadband radiation may be directed towards a MOF 100, and a wavelength-resolved reflection spectrum may be obtained.

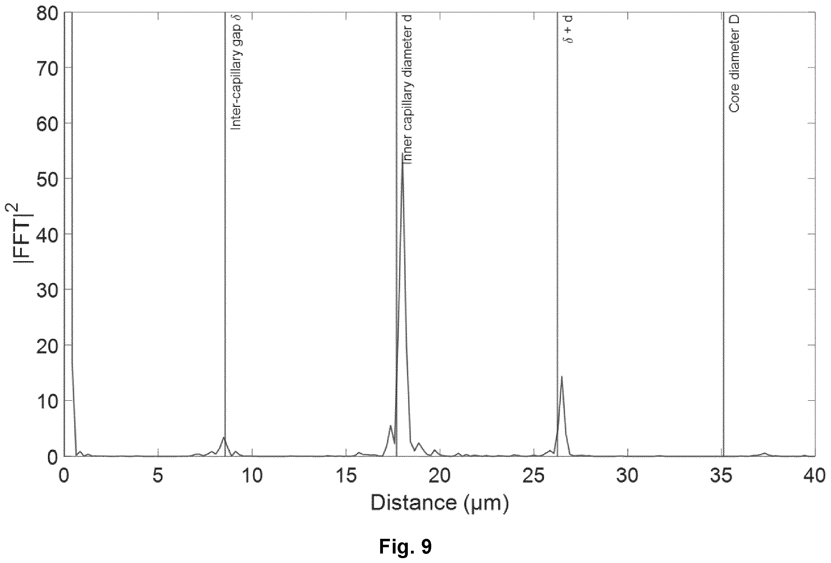

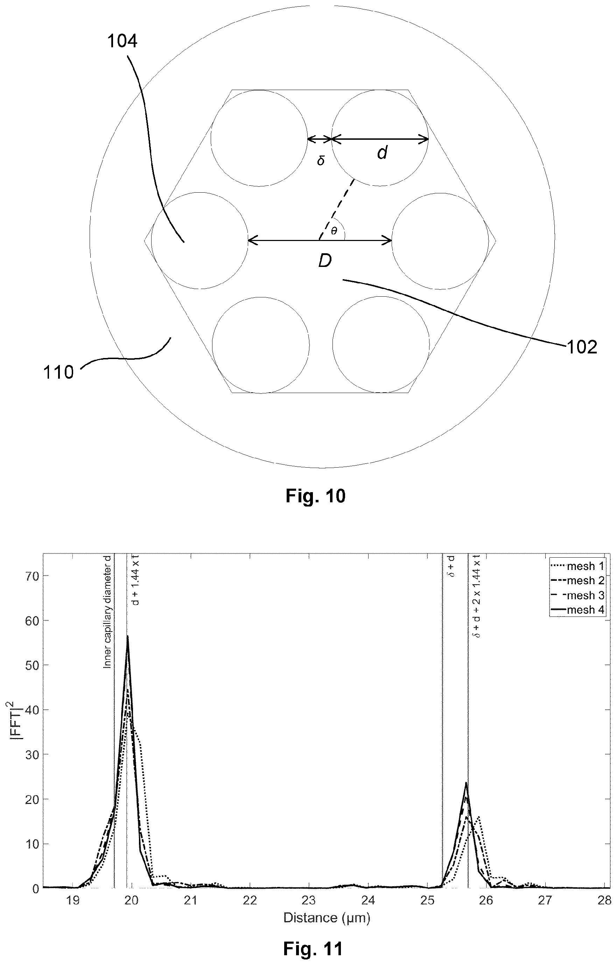

Figure 9 shows simulated results of a spectrum obtained for a simulated MOF, where a Fourier transform has been applied to the data so that the distances between the various surfaces forming optical cavities to act as etalons can be resolved. The results shown in Figure 9 correspond to a simulated hexagonal MOF comprising six AREs for which $D = 35.12$ $\mu$m, $d = 17.7$ $\mu$m, and $t = 0.15$ $\mu$m. Figure 10 schematically illustrates an example of a hexagonal MOF comprising six AREs 104. As shown in Figure 10, the AREs 104 are substantially evenly distributed about the core region 102, located at the vertices of the hexagonal cross section defined by the jacket region 110. The AREs have an angular separation, $\theta$. In the case of a symmetrical hexagonal MOF, as schematically illustrated in Figure 10, $\theta$ is equal to, or substantially equal to, 60 degrees.

As shown in Figure 9, a plurality of clear peaks are observed in the transformed spectrum, each peak corresponding to interference of the radiation within an optical cavity defined by structural elements of a MOF. For example, each of a pair of reflective surfaces formed by two opposing outer ARE surfaces (giving $\delta$), two opposing inner ARE surfaces (giving $d$), and an inner ARE surface opposite an outer ARE surface (giving $\delta + d$), may act as an etalon. The distances between each pair of reflected surfaces is determined according to the transmission or reflection of light by each etalon. No peak is observable in Figure 9 corresponding to the core diameter, $D$. Without wishing to be bound by theory, lack of an observable peak corresponding to the core diameter, $D$, may be due to the formation of an unstable resonator by the negative curvature of the outer surfaces of the ARE walls. This may be less of a problem for detecting the distance between adjacent AREs (giving $\delta$), which is much smaller than the core diameter, $D$.

It will be understood that, while the ARE wall thickness, t, is not resolvable in Figure 9, it would be possible to measure t using a sufficiently broad radiation spectrum.

Even though the core diameter, $D$, is not directly detectable by the present method, $D$ can be calculated using the dimensional parameters that are detectable.

For example, the core diameter, $D$, can be calculated using knowledge of the distance between AREs, $\delta$, the outer diameter of the AREs, $d_{out}$, and the geometrical layout of the MOF (i.e. the number of AREs, $N$, for example six). For the purposes of determining $D$ by this method, it can be assumed that the ARE wall thickness, $t$, is sufficiently small that $d_{out} = d + 2t \approx d$ (i.e. where $d$ is the inner ARE diameter). It is also assumed that $D > d \gg t$. $D$, may then be determined according to:

$$D = \left[ \frac{1 + \dfrac{\delta}{d_{out}}}{\sin\left(\dfrac{\pi}{N}\right)} - 1 \right] \cdot d_{out}$$

Figure 11 illustrates part of a transformed simulated spectrum for a MOF with $D = 31.12$ $\mu$m, $d = 19.7$ $\mu$m and $t = 0.15$ $\mu$m, where the simulation was repeated several times ("mesh" 1 to 4). As shown in Figure 11, when the ARE wall thickness, t, is included, extremely good agreement is found with the locations of the peaks. The deviation of the peaks from the expected positions without including t is smaller than the resolution of the measurement (~0.1 $\mu$m).

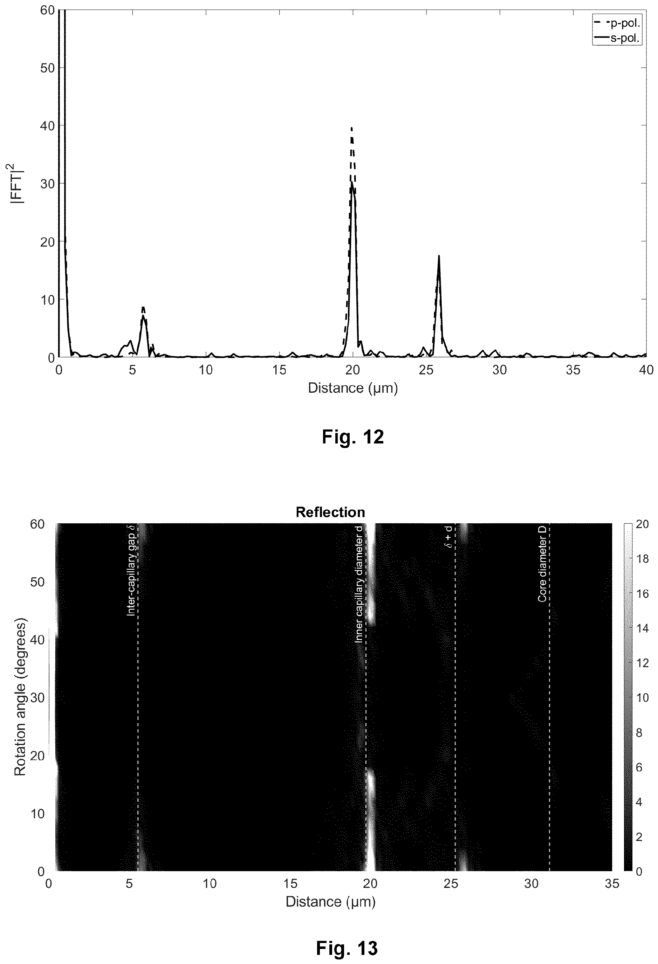

Figure 12 illustrates the effects of the polarisation of the radiation (p-pol. and s-pol.) on a measurement of another MOF. Advantageously, as illustrated in Figure 12, the positions of the peaks, and the ability to detect the peaks, are not affected by the polarisation of the radiation.

Figure 13 illustrates the detected reflections of the various peaks associated with structural elements of a hexagonal MOF resolved by rotation angle of the MOF. As shown in Figure 13, the positions of the peaks advantageously do not change with angle. This is in contrast to some other methods for determining dimensional parameters, such as WGM spectroscopy, in which the measured ARE diameter varies with rotation angle. The lack of variation in the measurement while the MOF rotates may be particularly useful during manufacturing of the MOF, in which the MOF may be prone to some degree of random rotation.

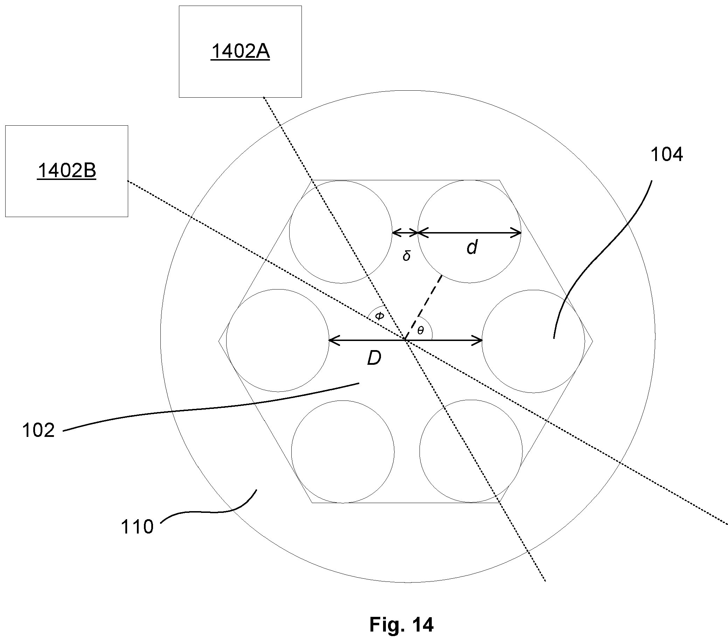

Figure 13 also shows that the strength of the signal (peak height shown in the grayscale) varies with rotation angle, including the formation of a "dead zone" between around 20 degrees and 40 degrees in which the ARE diameter peak is reduced to zero. This dead zone may be caused by the fact that radiation from a radiation source is passing between adjacent AREs when the MOF is in an orientation corresponding to this angular range. In order to prevent loss of signal at these rotation angles, it may be preferable to employ two or more radiation sources in the method described herein. For example, Figure 14 illustrates a measurement setup in which radiation for the measurement is provided by a first radiation source 1402A and a second radiation source 1402B. The first radiation source 1402A and the second radiation source 1402B are arranged to direct radiation radially towards a longitudinal axis of the MOF (i.e. at the centre of the core region 102), and are angularly separated by an angle, $\Phi$. In order to ensure that at least one of the first radiation source 1402A, and the second radiation source 1402B, is always incident on at least one ARE 104, $\Phi$ is related to the angular separation between the AREs 104, $\theta$, by $\phi = n\beta \cdot \theta$, wherein $0.25 \leq \beta \leq 0.75$, and wherein $n$ is a positive integer (i.e. $n$ = 1, 2, 3, ...). For example, the first radiation source 1402A and the second radiation source 1402B may be angularly separated by around half of an angular separation between the AREs 104 (e.g. the first radiation source 1402A and the second radiation source 1402B may be angularly separated by approximately 30 degrees, or by an odd integer multiple of approximately 30 degrees, in the case of a hexagonal cross section MOF having six AREs). While for simplicity Figure 14 only shows one ray of radiation emanating from each of the first radiation source 1402A and the second radiation source 1402B, it will be understood that the first radiation source 1402A and the second radiation source 1402B preferably each emit radiation across a wide range of angles to ensure that reflections are detectable from optical cavities formed between adjacent AREs 104 as well as within AREs 104. The reflected radiation may be detected by a suitable detector (not shown).

In some examples, only one radiation source may be employed. In some examples, more than two radiation sources may be employed. A radiation source as described herein may be a broadband radiation source capable of emitting radiation having wavelengths ranging from ultraviolet (UV) to infrared (IR) or near infrared (NIR) radiation, e.g. 200-1200 nm. Examples of suitable broadband radiation sources include arc lamps, tungsten-halogen lamps, xenon lamps, or any other suitable radiation source, including light emitting diode (LED)-based radiation sources.

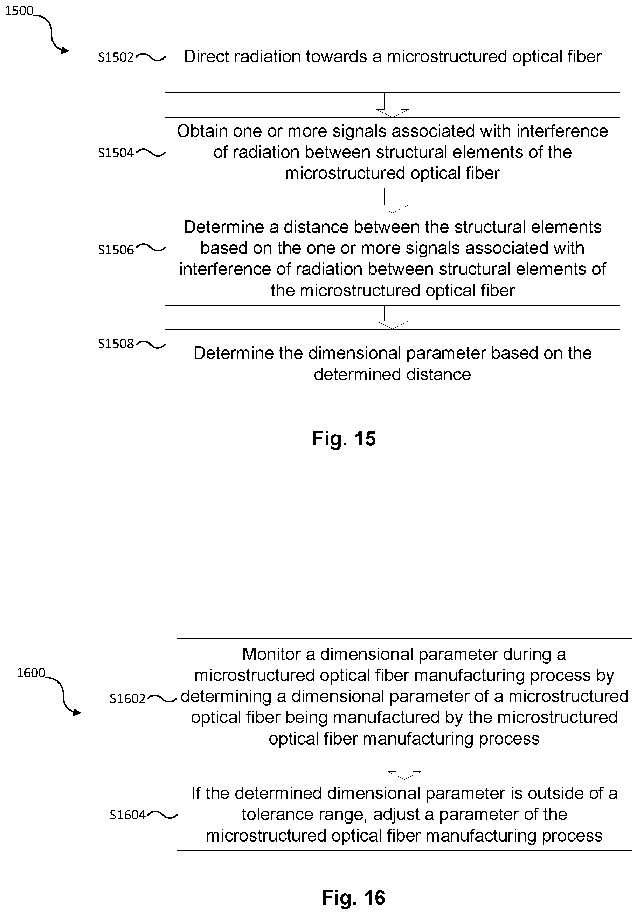

Figure 15 illustrates an example of a method 1500 for determining a dimensional parameter of a MOF according to the present disclosure.

In a step S1502, the method 1500 comprises directing radiation towards a MOF. As described herein, the radiation may be provided by one or more broadband radiation sources.

In a step S1504, the method 1500 comprises obtaining one or more signals associated with interference of radiation between structural elements of the MOF. As described herein, the interference may be Fabry-Pérot interference. The signals may correspond to reflection and/or transmission of radiation by an optical cavity defined by structural elements of the MOF, resolved by radiation wavelength, to give a width of the optical cavity.

In a step S1506, the method 1500 comprises determining a distance between the structural elements based on the one or more signals associated with interference of the radiation between structural elements of the MOF.

In a step S1508, the method 1500 comprises determining the dimensional parameter based on the determined distance. For example, the dimensional parameter may correspond directly to the determined distance (e.g. a distance between AREs). In some examples, the dimensional parameter may be determined based on additional determined distances, and/or knowledge of the geometrical layout of the MOF. For example, the core diameter may be determined based on the distance between AREs, the ARE diameter, and the number of AREs (e.g. arranged symmetrically around the core region).

An example of a MOF manufacturing process according to the present disclosure will now be briefly described. It will be appreciated that other manufacturing processes may be applied alternatively or in combination with the method described herein. Detailed examples of MOF manufacturing processes are known in the art, for example as described in EP 3136143 A1, the contents of which are hereby incorporated by reference. It will be appreciated that the MOF manufacturing process briefly described herein may comprise additional steps that are omitted for clarity.

In a first manufacturing step, a glass preform is made, typically by incorporating thinwalled glass tubes (some mm in outer diameter) into a hollow jacket (some cm in diameter). The thinwalled glass tubes are mechanically fixed to the jacket.

In a second manufacturing step, the glass preform is then fed into a furnace where heat is applied making the glass viscous (around 1900 - 2000 degrees C).

In a third manufacturing step, the preform is drawn down to a fiber by pulling at the fiber end faster than feeding the preform into the furnace. The inner hollow structure can be modified by applying over/under pressure with respect to the environment. It may be that each hollow region (e.g., capillaries, or AREs, 104 and core region 102) can experience a different over/under pressure.

In a fourth manufacturing step, the fiber is then collected on a spool.

According to the present disclosure, it may be possible to obtain a MOF by a method in which one or more dimensional parameters of the MOF are determined "in-line" during manufacturing of the MOF, enabling real-time feedback to be used to adjust manufacturing process parameters if the MOF is outside of a required specification.

Figure 16 illustrates an example of a method 1600 for obtaining a MOF according to the present disclosure.

In a step S1602, the method 1600 comprises monitoring a dimensional parameter during a MOF manufacturing process by determining a dimensional parameter of the MOF being manufactured by the MOF manufacturing process. The MOF manufacturing process may be any suitable process as described herein. The dimensional parameter may be determined by any suitable method, such as any of the methods for determining a dimensional parameter of a MOF as described herein, e.g. the method 1500 illustrated in Figure 15. In some examples, the dimensional parameter may be monitored continuously, e.g. using a continuously output measurement of the dimensional parameter. In some examples, the dimensional parameter may be determined at regular intervals.

In a step S1604, the method 1600 comprises adjusting a parameter of the MOF manufacturing process if the determined dimensional parameter is outside of a tolerance range. For example, if the determined dimensional parameter is any of an ARE diameter, a separation between AREs, and/or a core diameter, and one or more of the dimensional parameters is outside of a tolerance range, adjusting a parameter of the MOF manufacturing process may comprise adjusting a pressure in the capillaries to adjust a diameter of the AREs, which would also change the ARE separation and the core diameter of the MOF, until the dimensional parameter(s) is/are within the required tolerance range.

In some examples, one or more of the methods described herein, including the methods illustrated in Figures 15 and 16, may be implemented by a computer. For example, a non-transitory computer readable medium, e.g. a EEPROM (e.g. a flash memory) a disk, CD- or DVD-ROM, programmed memory such as read-only memory (e.g. for Firmware), may comprise instructions which, when executed by a processor of a computing device, cause the computing device to carry out one or more of the methods described herein. The instructions may be provided on one or more carriers. For example there may be one or more non-transient memories, e.g. a EEPROM (e.g. a flash memory) a disk, CD- or DVD-ROM, programmed memory such as read-only memory (e.g. for Firmware), one or more transient memories (e.g. RAM), and/or a data carrier(s) such as an optical or electrical signal carrier. The memory/memories may be integrated into a corresponding processing chip and/or separate to the chip. Code (and/or data) to implement embodiments of the present disclosure may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language. For example, the instructions may comprise instructions for controlling one or more radiation sources, and/or one or more detectors, as described herein via a suitable hardware interface system. The instructions may further comprise instructions to analyse signals detected by the detector(s) to determine the distance(s) between structural elements as described herein.

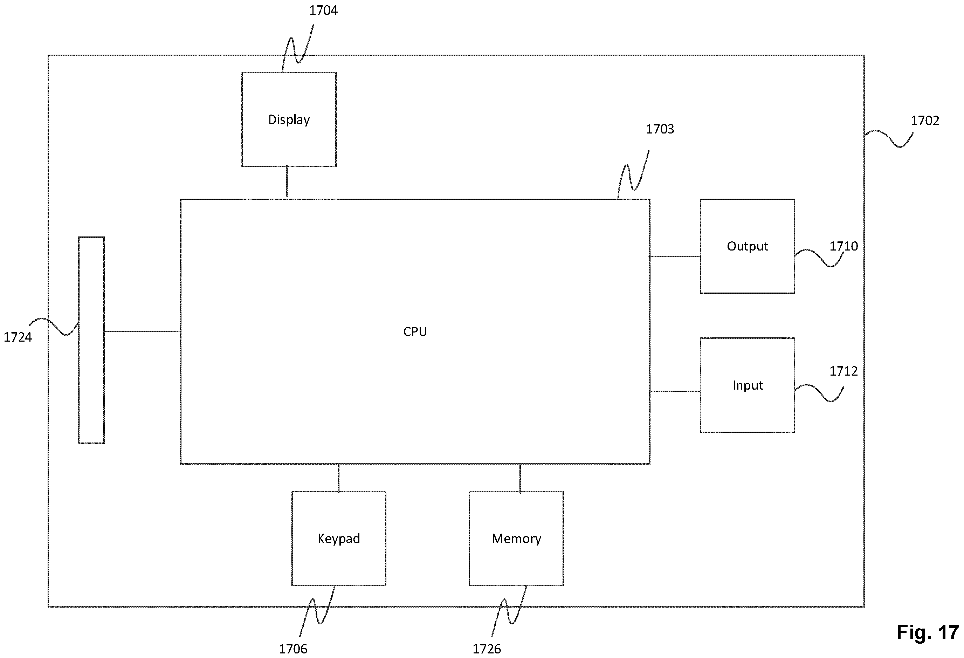

Figure 17 illustrates a detailed view of an example of a computer system (also referred to as a user terminal) 1702 through which instructions corresponding to the methods described herein may be carried out. The computer system 1702 comprises a central processing unit ("CPU") 1703, to which may be connected a display 1704 such as a screen or touch screen, and a user input device such as a keypad 1706. The computer system 1702 comprises an input 1712 and an output 1710. The input 1712 may enable a connection between the CPU 1702 and one or more devices that may be employed in carrying out the methods described herein, e.g. one or more detector(s). Such a connection may be wired and/or wireless. The output may enable a connection between the CPU 1702 and one or more devices that may be employed in carrying out the methods described herein, e.g. one or more radiation sources. Such a connection may be wired and/or wireless. One example of such an interface is a USB interface. The CPU 1702 may be connected to a network interface 1724 such as a modem for communication with a network. The user terminal 1702 also comprises a memory 1726 for storing data as is known in the art. The memory 1726 may be a permanent memory, such as ROM. The memory 1726 may alternatively be a temporary memory, such as RAM.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A method of determining a dimensional parameter of a microstructured optical fiber (MOF), the method comprising:

   directing radiation towards the MOF;
   obtaining one or more signals associated with interference of the radiation between structural elements of the MOF;
   determining a distance between the structural elements based on the one or more signals associated with interference of the radiation between structural elements of the MOF; and
   determining the dimensional parameter based on the determined distance.

2. A method according to claim 1, comprising determining the dimensional parameter based on the determined distance, and a geometrical layout of the MOF.

3. A method according to claim 1 or 2, wherein the MOF comprises a core region, and wherein the structural elements are anti-resonant elements surrounding the core region.

4. A method according to claim 3, wherein the dimensional parameter comprises a core diameter, the core diameter being a diameter of the core region.

5. A method according to claim 4, further comprising:

   obtaining one or more signals associated with interference of the radiation within one or more of the anti-resonant elements;
   determining an anti-resonant element diameter of the one or more of the anti-resonant elements based on the one or more signals associated with interference of the radiation within one or more of the anti-resonant elements; and
   determining the dimensional parameter based additionally on the anti-resonant element diameter.

6. A method according to claim 4 or 5, comprising determining the dimensional parameter, $D$, according to:

$$D = \left[ \frac{1 + \dfrac{\delta}{d_{out}}}{\sin\left(\dfrac{\pi}{N}\right)} - 1 \right] \cdot d_{out}$$

wherein $\delta$ is a distance between the anti-resonant elements, wherein N is a total number of anti-resonant elements, and wherein $d_{out} = d + 2t$, wherein $d$ is an anti-resonant element diameter and wherein t is a wall thickness of the anti-resonant elements.

7. A method according to claim 6, wherein $d_{out} = d + 2t \approx d$.

8. A method according to claim 3, wherein the dimensional parameter comprises a wall thickness of the anti-resonant elements.

9. A method according to claim 3, wherein the dimensional parameter comprises a distance between the anti-resonant elements.

10. A method according to claim 3, wherein the dimensional parameter comprises an anti-resonant element diameter.

11. A method according to any one of claims 3 to 9, comprising using a first radiation source and a second radiation source to direct the radiation radially towards a longitudinal axis of the MOF, the first radiation source and the second radiation source being angularly separated about the longitudinal axis by an angle, $\Phi$, wherein $\phi = n\beta \cdot \theta$, wherein $\theta$ is an angular separation between the anti-resonant elements, wherein $0.25 \leq \beta \leq 0.75$, and wherein $n$ is a positive integer.

12. A method according to any one of the preceding claims, wherein the MOF comprises a polygonal inner cross section.

13. A method according to any one of the preceding claims, wherein the interference comprises Fabry-Pérot interference.

14. A method for obtaining a MOF, comprising:

   monitoring a dimensional parameter during a MOF manufacturing process by determining, according to the method of any one of the preceding claims, a dimensional parameter of a MOF being manufactured by the MOF manufacturing process; and
   if the determined dimensional parameter is outside of a tolerance range, adjusting a parameter of the MOF manufacturing process.

15. A non-transitory computer readable medium comprising instructions which, when executed by a processor of a computing device, cause the computing device to carry out a method according to any one claims 1 to 13.

Fig. 1

**Fig. 2**

**Fig. 3**

**Fig. 4**

**Fig. 5**

Fig. 6

**Fig. 7**

EP 4 524 625 A1

**Fig. 8**

EP 4 524 625 A1

**Fig. 9**

**Fig. 10**

**Fig. 11**

**Fig. 12**

**Fig. 13**

Fig. 14

EP 4 524 625 A1

1500

S1502 — Direct radiation towards a microstructured optical fiber

S1504 — Obtain one or more signals associated with interference of radiation between structural elements of the microstructured optical fiber

S1506 — Determine a distance between the structural elements based on the one or more signals associated with interference of radiation between structural elements of the microstructured optical fiber

S1508 — Determine the dimensional parameter based on the determined distance

**Fig. 15**

1600

S1602 — Monitor a dimensional parameter during a microstructured optical fiber manufacturing process by determining a dimensional parameter of a microstructured optical fiber being manufactured by the microstructured optical fiber manufacturing process

S1604 — If the determined dimensional parameter is outside of a tolerance range, adjust a parameter of the microstructured optical fiber manufacturing process

**Fig. 16**

Fig. 17

Europäisches
Patentamt

European
Patent Office

Office européen
des brevets

# EUROPEAN SEARCH REPORT

**Application Number**

**EP 23 19 7095**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | XIONG YIFAN ET AL: "Four-ray interference model for complete characterization of tubular anti-resonant hollow-core fibers", OPTICS EXPRESS, vol. 30, no. 26, 16 December 2022 (2022-12-16), page 48061, XP093127686, US ISSN: 1094-4087, DOI: 10.1364/OE.477953 | 1-10, 12-15 | INV. G02B6/02 G02B6/032 |
| A | * abstract * <br> * figures 1, 3 * <br> * p. 48062, 2nd paragraph * <br> * p. 48069, last paragraph before 4.3 * <br> * section "3.1. Side-scattering spectrum measurement" * <br> * section "4.2 Diameter of cladding tube (d)" * <br> * section "4.3. Thickness of cladding tube (t)" * | 11 | |
| | ----- | | |
| X,D | FROSZ MICHAEL H. ET AL: "Non-invasive real-time characterization of hollow-core photonic crystal fibers using whispering gallery mode spectroscopy", OPTICS EXPRESS, [Online] vol. 27, no. 21, 10 October 2019 (2019-10-10), page 30842, XP093127642, US ISSN: 1094-4087, DOI: 10.1364/OE.27.030842 Retrieved from the Internet: URL:https://opg.optica.org/directpdfaccess /b7b0688d-49f2-4d76-93618c7ea36be26a_42220 2/oe-27-21-30842.pdf?da=1&id=422202&seq=0& mobile=no> [retrieved on 2024-02-06] | 1-10, 12-15 | TECHNICAL FIELDS SEARCHED (IPC) <br><br> G02B C03B G02F G01M |
| A | * figures 1,5,9 * | 11 | |
| | ----- | | |
| | -/-- | | |

The present search report has been drawn up for all claims

| Place of search | Date of completion of the search | Examiner |
|---|---|---|
| The Hague | 12 February 2024 | Dregely, Daniel |

EPO FORM 1503 03.82 (P04C01)

**page 1 of 3**

# EP 4 524 625 A1

European Patent Office
Europäisches Patentamt
European Patent Office
Office européen des brevets

## EUROPEAN SEARCH REPORT

Application Number

EP 23 19 7095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | XU XIAOBIN ET AL: "Nondestructive determination of the core size of a hollow-core photonic bandgap fiber using Fabry-Perot interference", OPTICS LETTERS, [Online] vol. 43, no. 13, 19 June 2018 (2018-06-19), page 3045, XP093127645, US ISSN: 0146-9592, DOI: 10.1364/OL.43.003045 Retrieved from the Internet: URL:https://opg.optica.org/view_article.cf m?pdfKey=69b2c8ce-ce0e-44c9-9148c8b9a1bf12 59_392600> [retrieved on 2024-02-07] | 1-10, 12-15 | |
| A | * figures 1-3 * * abstract * ----- | 11 | |
| X | CN 110 260 794 A (UNIV BEIHANG) 20 September 2019 (2019-09-20) | 1-10, 12-15 | |
| A | * figures 1-3,5 * * paragraphs [0042] – [0048] * ----- | 11 | TECHNICAL FIELDS SEARCHED (IPC) |

−/−−

The present search report has been drawn up for all claims

| Place of search | Date of completion of the search | Examiner |
|---|---|---|
| The Hague | 12 February 2024 | Dregely, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EUROPEAN SEARCH REPORT

**Application Number**

EP 23 19 7095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BUDD LEONARD ET AL: "Non-Destructive Structural Characterisation of Double Nested Antiresonant Nodeless Fiber", OPTICAL DEVICES AND MATERIALS FOR SOLAR ENERGY AND SOLID-STATE LIGHTING 2022, [Online] 1 January 2022 (2022-01-01), page SoTh3G.1, XP093128150, DOI: 10.1364/SOF.2022.SoTh3G.1 ISBN: 978-1-957171-16-6 Retrieved from the Internet: URL:https://opg.optica.org/view_article.cfm?pdfKey=46f7ac18-3172-41a9-a4f8ad39dbb792f4_512645> [retrieved on 2024-02-06] | 1-10, 12-15 | |
| A | * figures 1,2 * * table 1 * * sections "2. Method" and "3. Results" * ----- | 11 | |

|  | | | **TECHNICAL FIELDS SEARCHED (IPC)** |

The present search report has been drawn up for all claims

| Place of search | Date of completion of the search | Examiner |
|---|---|---|
| The Hague | 12 February 2024 | Dregely, Daniel |

## ANNEX TO THE EUROPEAN SEARCH REPORT
## ON EUROPEAN PATENT APPLICATION NO.

EP 23 19 7095

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2024

| Patent document cited in search report | Publication date | Patent family member(s) | Publication date |
|---|---|---|---|
| CN 110260794 A | 20-09-2019 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A1
- US 7265364 B
- US 7646471 B
- US 2010233600 A1
- WO 2016102127 A1
- US 20070058173 A1
- US 6020964 A
- US 6961116 B
- US 2015261097 A1
- US 2009195768 A
- EP 3136143 A1

**Non-patent literature cited in the description**

- **M. H. FROSZ et al.** *Opt. Express*, 2019, vol. 27 (21), 30842-30851
- **X. XU et al.** *Opt. Lett.*, 2018, vol. 43 (13), 3045-3048
- **Y. XIONG et al.** *Opt. Express*, 2022, vol. 30 (26), 48061-48074